# EUROPEAN PATENT SPECIFICATION

(11) **EP 1 927 055 B1**
(45) Date of publication and mention of the grant of the patent: **31.03.2010**
(21) Application number: 06803617.7
(22) Date of filing: 14.09.2006
(51) Int. Cl.: H04W 4/12

(54) **COLOR MULTIMEDIA MESSAGE**
MULTIMEDIAFARBNACHRICHT
MESSAGE MULTIMEDIA EN COULEUR

(30) Priority: 14.09.2005 US 717109 P
(43) Date of publication of application: 04.06.2008
(73) Proprietor: Roamware, Inc., San Jose, CA 95128 (US)
(72) Inventor: JIANG, John, Yue, Jun, Danville, CA 94506 (US)
(74) Representative: Wallis, Helen Frances Mary
(86) International application number: PCT/US2006/035866
(87) International publication number: WO 2007/033332

(56) References cited:
- DE-A1- 10 126 847
- DE-A1-102004 003 086
- GB-A- 2 404 112
- US-A1- 2002 087 631
- US-A1- 2002 137 507
- US-A1- 2002 169 892
- US-A1- 2003 208 560
- US-A1- 2004 002 350
- US-A1- 2005 198 151

## Description

### Related Application

This application claims priority from United States Provisional Patent Application Serial No. 60/717,109 entitled "Voice SMS and Video SMS", filed September 14, 2005. This Application is also related to U.S. Application No. 11/374,427 filed March 14, 2006, which claims priority from Provisional Application no. 60/662,031 filed March 14, 2005. This application also is related to the following Applications: U.S. Application No. 11/374,437 filed March 14, 2006, which claims priority from Provisional Application No. 60/662,030 filed March 14, 2005; U. S. Application No. 11/375,577 filed March 15, 2006, which claims priority from Provisional Application 60/662,028 filed March 15, 2005; U.S. Application No. 11/402,128 filed April 12, 2006, which claims priority from Provisional application No. 60/670,917 filed April 12, 2005; and U.S. Application No. 10/635,804 filed August 5, 2003, now U.S. patent No. 7,072,651, which claims priority from Provisional Application No. 60/401,362 filed August 5, 2002. All of these related applications are incorporated by reference herein in their entirety.

### BACKGROUND

### Field of the Invention

The present invention relates generally to transmission of information over an electronic network, and more specifically providing value added services to a multimedia message.

SMS is a popular means of mobile communication. A sender can send a text message, a voice message, and a video message. Sending an SMS is often quick, inexpensive and less intrusive than calling. However, there is a scope for improvements in the presentation of the text message, the voice message, and the video message. The presentation of an SMS may vary from one recipient to another. For example, a sender may wish to present a message sent to a friend differently than a message sent to a close relative. The presentation of an SMS may also vary with the content of the message or situation. For example, a sender may wish to vary the presentation of a "Happy Birthday" message from a "Merry Christmas" message. A sender may also feel the need to send similar messages or messages with minor variations to different recipients. The variations may not be related to the content of the message but the variations may lie essentially in the presentation of the message. Also, the sender may prefer more dramatic and emotional effects linked to a color.
Thus, there is a need for providing value added services to a message and making provisions for adding features to the text message, the voice message, and the video message. Further, there is a need to make provisions for adding features that result in dramatic and emotional effects.
DE 10 2004 003 086A1 describes a method of transferring picture messages over a network. User preferences may be stored in a database and used to select the format or content of a message.

### SUMMARY

The present invention relates to a system and a method for making improvements in the presentation of a message and providing one or more colors to the message. Provision of a color refers to provision of an additional feature such as background music. The message can be a multimedia message. Further, the message can be a text message, a voice message and a video message. The modified message is termed as color multimedia message.
The present invention provides a color-provisioning multimedia messaging system for providing one or more colors to a multimedia message. The color-provisioning multimedia messaging system comprises a subscriber's database, a color selection module, a color linking module, and a sending module. The subscriber's database stores color subscription details of at least one subscriber. The color selection module selects one or more colors subscribed by the sender. The color linking module links the one or more colors with the multimedia message and generates a color multimedia message, and the sending module sends the color multimedia message to at least one recipient. The system further comprises a color replacement module for replacing a color of the multimedia message with a feature equivalent to the color if the size of the color multimedia message exceeds a predefined size.
The present invention also provides a method for providing one or more colors to a multimedia message. The method comprises storing color subscription details of at least one sender, selecting one or more colors subscribed by a sender using the subscriber's database, linking the one or more colors with the multimedia message, and sending the color multimedia message to at least one recipient, and replacing a color of the multimedia message with an equivalent feature if the size of the multimedia message exceeds a predefined size.
The present invention further provides a computer readable medium for storing a computer program. The computer program, when executed by a processor, causes the processor to perform the method for providing one or more colors to a multimedia message. The method comprises the steps of storing color subscription details of at least one sender, selecting one or more colors subscribed by a sender using the subscriber's database, linking the one or more colors with the multimedia message, and sending the color multimedia message to at least one recipient, and replacing a color of the multimedia message with an equivalent feature if the size of the multimedia message exceeds a predefined size.

### BRIEF DESCRIPTION OF THE DRAWINGS

The present invention is illustrated by way of example, and not limitation, in the figures of the accompanying drawings in which:

FIG. is an exemplary overview of the present invention;

FIG.2 illustrates a block diagram of an embodiment of a color-provisioning multimedia messaging system for providing a color to a multimedia message;

FIG. 3 illustrates a block diagram of another embodiment of a color-provisioning multimedia messaging system for providing a color to a multimedia message;

FIG. 4 illustrates a flowchart for providing a color to a multimedia message in accordance with an embodiment of the present invention;

FIG. 5 illustrates a flowchart of another embodiment of a method for providing a color to a multimedia message;

FIG. 6A and FIG. 6B illustrate flowcharts of two different embodiments of a method for sending a color multimedia message;

FIG. 7- illustrates a flowchart of an embodiment of a method of publishing a color - forwarded by a sender; and

FIG. 8 illustrates a flowchart of an embodiment of a method to provide credit to a publisher for his published color.

### DETAILED DESCRIPTION OF THE DRAWINGS

The present invention relates to color provisioning multimedia messaging services. In the context of the present invention, color refers to without limitation one of subscriber's personal input, a celebrity voice, a joke, an advertisement, a ring tone, music, an audio file, a video file, other multimedia content and combinations thereof. For example, the color provided may be "happy birthday" music as a background to a voice message or a background multimedia effect to a video message. In various embodiments, a color may be provided either before the multimedia message, or after the multimedia message or in the background of the multimedia message or a combination thereof. As a result, a color may be active on a recipient's device before the activation of a multimedia message, after the activation of a multimedia message, or in the background of a multimedia message.

In the following description, a subscriber refers to a person who has subscribed to color provisioning multimedia messaging services. A sender refers to a person sending a multimedia message to one or more recipients. A recipient refers to a person receiving a multimedia message.

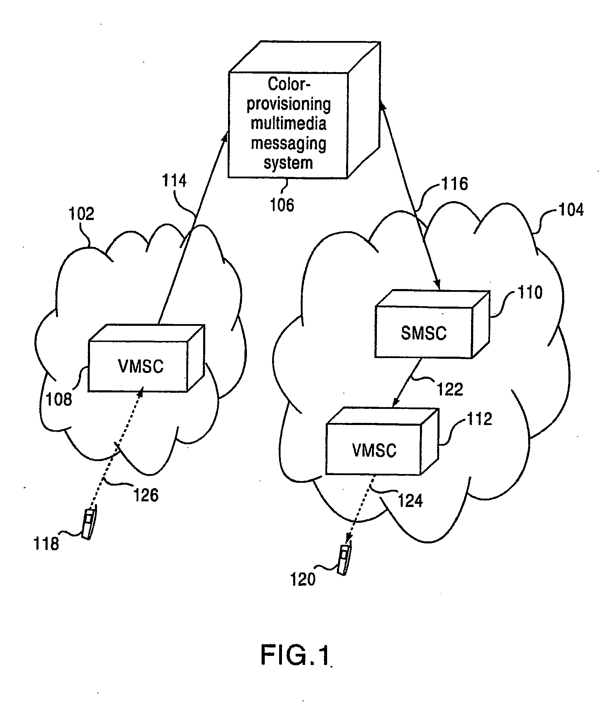

FIG.1 is an exemplary overview of the present invention. The overview illustrates a sender end 102, and a recipient end 104, coupled to a color-provisioning multimedia messaging system 106. Sender end 102 comprises a VMSC 108 which communicates with color-provisioning multimedia messaging system 106 via a link 114. Recipient end 104 comprises a SMSC 110 communicating with color-provisioning multimedia messaging system 106 via a link 116. Further, SMSC 110 communicates with a VMSC 112. In various embodiments, link 114 may be a dedicated voice trunk, a normal voice trunk, or IP-based. In various embodiments, link 116 may be an SS7 interface or an IP protocol, for example, SMPP, UCP and the like based. In various embodiments, SMSC 110 may be an external SMSC, or a built-in SMSC, or a dedicated SMSC.

When a sender 118 wishes to send a colored multimedia message to a recipient 120, he dials a prefixed recipient's number (for example, "*<recipient number>"). The multimedia message may be a voice message or a video message. VMSC 108 receives the call and is configured to route the prefixed call to color-provisioning multimedia messaging system 106 via link 114. The call may be routed via a circuit-switched network or a packet-based (for example, IP) network. When a connection is established between sender 118 and color-provisioning multimedia messaging system 106, sender 118 leaves a multimedia message for recipient 120. Alternately, if the call duration has been exhausted, color-provisioning multimedia messaging system 106 ends the call. In an embodiment, the connection between VMSC 108 and color-provisioning multimedia messaging system 106 may be a circuited ISUP/ISDN/R2MF connection in case of a voice message. In another embodiment, the connection between VMSC 108 and color-provisioning multimedia messaging system 106 is a circuited ISUP/ISDN connection with UDI 64 kbps and BS30 for the call set up in case of a video message.

Color-provisioning multimedia messaging system 106 provides a color to the sender's multimedia message. The color-provisioning multimedia messaging system 106 stores color subscription details of at least one subscriber. The color-provisioning multimedia messaging system 106 selects one or more colors subscribed by the sender and thereafter, links the one or more colors with the multimedia message and provides a colored multimedia message. Color-provisioning multimedia messaging system 106 sends an SMS alert to SMSC 110 of recipient end 104 via link 116. SMSC 110 communicates with VMSC 112 which transmits the SMS alert to recipient 120. The message content of the SMS alert may indicate whether the multimedia message is a voice message or a video message. Recipient 120 may retrieve the colored multimedia message by either replying to the SMS alert or via a call back.

In an embodiment, sender 118 and recipient 120 may be subscribers of a common operator. In another embodiment, sender 118 and recipient 120 may be subscribers of different operators. In the latter embodiment, color-provisioning multimedia messaging system 106 may be deployed at the sender's end 102 or by a third party. Further, the deployment of color-provisioning multimedia messaging system 106 may be operator-specific or country-specific.

In an embodiment, when color-provisioning multimedia messaging system 106 is hosted at the sender's end, a sender SMSC may send an SMS alert to SMSC 110. In another embodiment as described in FIG.1, when color provisioning multimedia messaging system 106 is hosted by a third party, color-provisioning multimedia messaging system 106 may send an SMS alert to SMSC 110.

It may be noted that although the overview is described using a single recipient, the multimedia message may be transmitted to a plurality of recipients simultaneously. The communication between each recipient and the sender will be established as described in FIG.1.

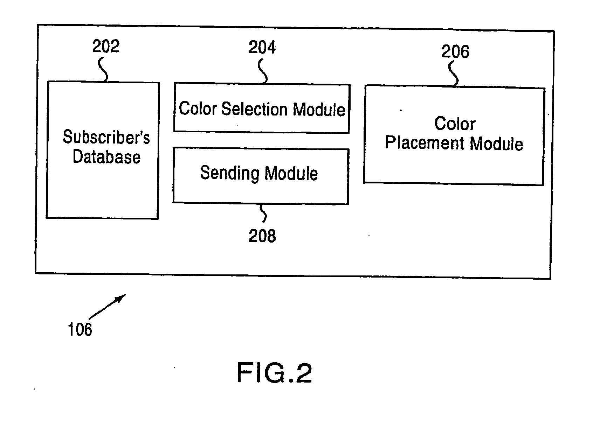

FIG.2 illustrates a block diagram of a color-provisioning multimedia messaging system 106 for providing one or more colors to a multimedia message in accordance with an embodiment of the present invention. Color-provisioning multimedia messaging system 106 comprises a subscriber's database 202, a color selection module 204, a color linking module 206, and a sending module 208. Subscriber's database 202 stores the data relating to the subscription details of at least one sender. The subscription details include, without limitation, the name of the sender, the type of service subscribed by the sender, the supporting services subscribed by the sender, and the period of subscription. For example, the type of service may include subscribing to the provision of a color to a multimedia message. The supporting services include additional services that include, without limitation, scheduling delivery of a color multimedia message, providing advertisements to a color multimedia message, and linking the color with a ring tone so that the ring tone acts as a signature of the sender. For example, a subscriber may subscribe to a color to be provided to a multimedia message. A supporting service may include specifying the duration of the activation of the color. In an embodiment, the process of subscribing to the service can be through a user interface. The user interface enables a sender or a subscriber to subscribe to the color provisioning multimedia messaging service. In an embodiment of the invention, user interface comprises, without limitation, user interface elements, joystick, trackball, and touchpad. For example, if the sender dials "*#-recipient number", then the color is applied, otherwise it is not. A sender may have an option of providing the color to the multimedia message on a one-time basis. In the case of a voice message, the sender may select the color by listening through the music options available in color provisioning multimedia messaging system 106. In the case of a video message, a sender may view the video options available at color provisioning multimedia messaging system 106 and thereafter, select the video to be provided with the multimedia message. In case the sender has a MMS or IMS enabled handset, the sender may listen, or view a selection of background multimedia messages. In another embodiment of the invention, the sender can communicate with color-provisioning multimedia messaging system 106 via one of web, Wireless Application Protocol (WAP), Interactive Voice Response (IVR), call etc.

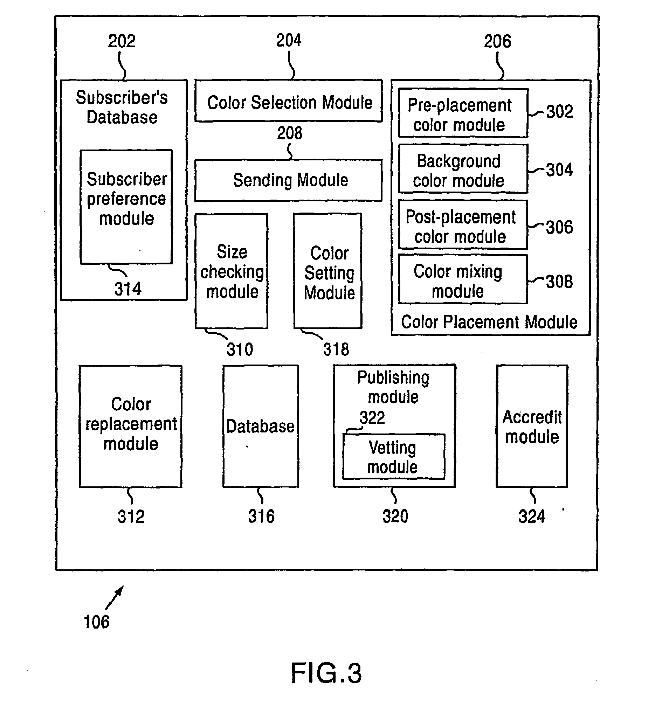

Color selection module 204 selects one or more colors subscribed by the sender. In an embodiment of the invention, a color is selected from one of subscriber's personal inputs, a celebrity voice, a joke, an advertisement, a ring tone, music, an audio file, a video file, other multimedia content and combinations thereof. In another embodiment of the invention, the color can be provided to a multimedia message via a short message service (SMS) uniform resource locator (URL) embedded in an SMS notification. In an embodiment of the invention, the multimedia message may be at least one of a text message, a voice message and a video message. Color selection module 204 selects a color based on the data stored in the subscriber's database 202 corresponding to the sender. In an embodiment of the invention, the sender may define different colors for different occasions. For example, the sender may subscribe to music and music2 as colors for birthday and Christmas respectively. In another embodiment of the invention, the sender may subscribe to a joke as a color for a group of recipients placed in the category of friends. Color linking module 206 links the selected one or more colors with the multimedia message. The linking of a selected color is further described in conjunction with FIG. 3. Sending module 208 sends the colored multimedia message to at least one recipient.

For example, if a sender wants to send a multimedia message with a colored background to one or more recipient(s), the sender may subscribe to the color-provisioning multimedia messaging service. The sender may specify the color, for example, a music file named music1, during subscription. On the receipt of the multimedia message, color-provisioning multimedia messaging system 106 checks the details of the services subscribed by the sender in subscriber's database 202. Color selection module 204 selects music 1 as the color. Color linking module 206 links the music! as a background to the multimedia message which may be a voice message. Sending module 208 sends the color multimedia message to one or more recipient(s) specified by the sender.

In an embodiment, the color is specified in a multimedia message as a SMS URL. The recipient may receive an SMS notification embedding the SMS URL. Thereafter, the recipient can retrieve the content of the URL via Wireless Application Protocol (WAP) or General Packet Radio Service (GPRS).

In an embodiment of the invention, the sender may specify the duration for which the color is to be played in the subscription details. The duration of the color does may affect the maximum duration of the multimedia message. A color can be subscribed and applied each time the subscriber sends a multimedia message. In another embodiment of the invention, the subscriber can specify the start time and the end time for activating the color. In yet another embodiment, the subscriber can specify the time of activation of the color multimedia message. For example, a sender who wishes to send a color multimedia message to wish a recipient happy birthday may select the time of activation of the color multimedia message as 00:01 AM.

In an embodiment, a subscriber may be charged a one-time fee for color provisioning multimedia service. In another embodiment of the invention, each change in the color can be charged.

In an embodiment of the invention, color-provisioning multimedia messaging system 106 can provide a color to a message that may not be a multimedia message. In another embodiment of the invention, the sender can send a color multimedia message to a recipient who is a subscriber of multimedia messaging (MMS) service and has a MMS capable handset or IMS capable handset.

FIG. 3 illustrates a detailed block diagram of color-provisioning multimedia messaging system 106 for providing a color to a multimedia message. In addition to the modules described in FIG. 2, color-provisioning multimedia messaging system 106 optionally comprises a pre-linking color module 302, a background color module 304, a post-linking color module 306, a color mixing module 308, a size checking module 310, a color replacement module 312, a subscriber preference module 314, a database 316, a color setting module 318, a publishing module 320, a vetting module 322, and an accredit module 324.

In an embodiment of the invention, color linking module 206 comprises pre-linking color module 302, background color module 304, post-linking color module 306, and optionally, color mixing module 308.

Pre-linking color module 302 links the color before the multimedia message. Pre-linking color module 302 ensures that the time of activation of the color is before the time of activation of the multimedia message, for example, a voice message with "happy birthday" music. Due to the action of pre-linking color module 302, when the recipient receives the color multimedia message, "happy birthday" music is activated first on the recipient's device while the voice message is activated after the activation of "happy birthday" music is complete.

Background color module 304 links the color in the background of the multimedia message. Background color module 304 ensures that the activation of the color co-occurs with the activation of the multimedia message, for example, a voice message with "happy birthday" music. Due to the action of background color module 304, when the recipient receives the color multimedia message, "happy birthday" music and the voice message are activated simultaneously on the recipient's device. The "happy birthday" music acts as a background to the voice message.

Post-linking color module 306 links the color after the multimedia message. Post-linking color module 306 ensures that, the time of activation of the color is after the time of activation of the multimedia message, for example, a voice message with "happy birthday" music. Due to the action of post-linking color module 306, when the recipient receives the color multimedia message, the voice message is activated first on the recipient's device while the "happy birthday" music is activated after the activation of the voice message is complete.

In one embodiment, color-provisioning multimedia messaging system 106 may be configured to send the color and the multimedia message obtained from at least one of pre-linking color module 302, background color module 304 and post-linking color module 306 using a conference bridge using two or more separate streams. For example, the system may deliver the multimedia message and the color using two separate streams, one stream comprising the color and the other stream comprising the multimedia message. In an embodiment, the recipient's handset may be 3G enabled handset. In another embodiment, the system may deliver the multimedia message and the color using a single stream. In this case, the color mixing module 308 will first mix the color and the multimedia message, in such order as specified by at least one of pre-linking color module 302, background color module 304 and post-linking color module 306. Thereafter, the resultant color multimedia message is sent to the recipient using a single stream. In an embodiment, the resultant color multimedia message may comprise of colors linked before, after and in the background of the multimedia message.

Size checking module 3.10 checks the size of the color multimedia message. If the size of the color multimedia message is greater than a predefined size, size checking module 310 sends the color multimedia message color replacement module 312. In an embodiment of the invention, the recipient's device may be an MMS enabled device.

Color replacement module 312 replaces the color of the color multimedia message with a feature equivalent to the color. The feature equivalent to the color is selected such that the size of the feature equivalent to the color is smaller than the size of the color. Further, the feature equivalent to the color is selected such that the size of the multimedia message and the feature equivalent to the color is smaller than the predefined size. For example, if the size of a "happy birthday" multimedia color applied to a voice message is greater than the predefined, size, then color replacement module 312 may replace the happy birthday multimedia color with "happy birthday" music as a background to the voice message for the recipient to hear.

Subscriber preference module 314 lists the preference(s) of a sender for at least one recipient. Further, as shown in the FIG. 3, subscriber preference module 314 may be a part of subscriber's database 202. For example, a sender may want to send a multimedia message to two recipients A and B. The sender may want a voice message to be delivered to recipient A with music1 as background music and to recipient B with music2. as background music. These preferences are listed in subscriber preference module 314. Color selection module 204 selects the color for the multimedia message based on the preference of the sender listed in subscriber preference module 314. In another example, the sender may want to send the multimedia message to recipients A and B, with the same color but the order of linking the color may be different. In such a case, color linking module 206 links the color with the multimedia message based on the preference of the sender listed in subscriber preference module 314.

Database 316 maintains a record of color options provided to a subscriber. The color options include, without limitation, list of audio files, video files, jokes, wallpapers, advertisements, welcome notes, celebrity voices, other multimedia content and combinations thereof. In another embodiment of the invention, the sender can provide a color to a multimedia message on one-time basis. The sender can select a color for one-time application or input via a customer interface, which includes, but is not limited to WAP, Web, IVR, and a call. For one-time application of the colors present in database 316, the selection of a color can be done by using an input key sequence, for example, "*xmas<B#>" where "xmas" is a short-hand predefined by operator to represent a Christmas music.

Further, a sender may provide a color to color-provisioning multimedia messaging system 106. The sender may leave a a color in color-provisioning multimedia messaging system 106 by either dialing in the system or by forwarding a message to the system. Thereafter, "petting module 322 vets the color input by the sender. In various embodiments, vetting includes checking whether the color input by the sender is present in database 316, or checking the content of the color. If the check conducted by vetting module 322 is successful, the color is provided to publishing module 320. Publishing module 320 publishes the color input by the sender for use by other subscribers.

Accredit module 324 provides credit to subscribers when the subscribers' published colors are used by other senders. For example, subscriber A provides a joke that is published for use by other subscribers..If the published joke is used by other senders as a color, then accredit module 324 may provide a credit to subscriber A. The subscriber A receives a credit each time the published joke is used by a sender. In an embodiment of the invention, the credit can be in the form of additional talk-time added to the existing talk-time of the subscriber. In another embodiment, the credit can be in the form of a predefined number of free multimedia messages allotted to the subscriber. In an embodiment of the invention, a subscribed color can have a forwarding value. For example, if A forwards a joke to B, A gets a credit C1. If B forwards it to C, then B also gets a credit C1 and A gets a credit C2. If C forwards it to D, then C gets a credit C1, B gets a credit C2, and A gets a credit C3.

Optionally, the system provides for addition of signatures to multimedia messages. A sender can provide a signature that he wishes to provide to some or all of his multimedia messages.

In an embodiment, when a color multimedia message is delivered to a recipient, the recipient can subscribe to the received color. The recipient can select the sender's color for subscription. Further, the recipient can subscribe the received color for at least one of a color to be linked with a multimedia message, ring tone with a multimedia message, or signature to be linked with a multimedia message.

The recipient can also subscribe to a ring tone received along with a color multimedia message as the signature. In an embodiment of the invention, the recipient can provide the received color to a multimedia message on a one-time basis.

The aforesaid description deals with the modules as functional entities. One or more of the modules can be clubbed together. It will be apparent to a person skilled in the art that all possible variations achieving the aforesaid functionalities fall within the scope and spirit of the invention.

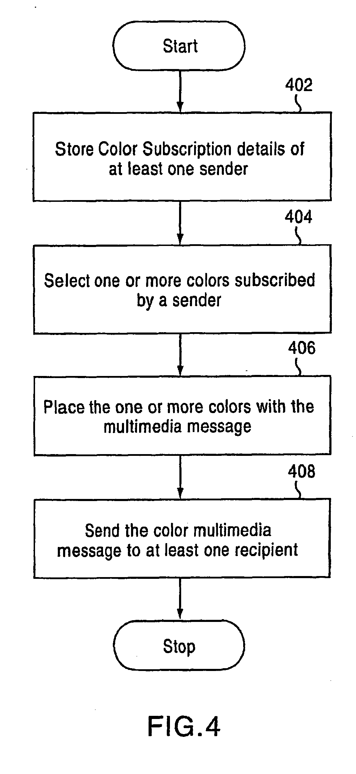

FIG. 4 illustrates a flowchart of an embodiment of a method for providing a color to a multimedia message.

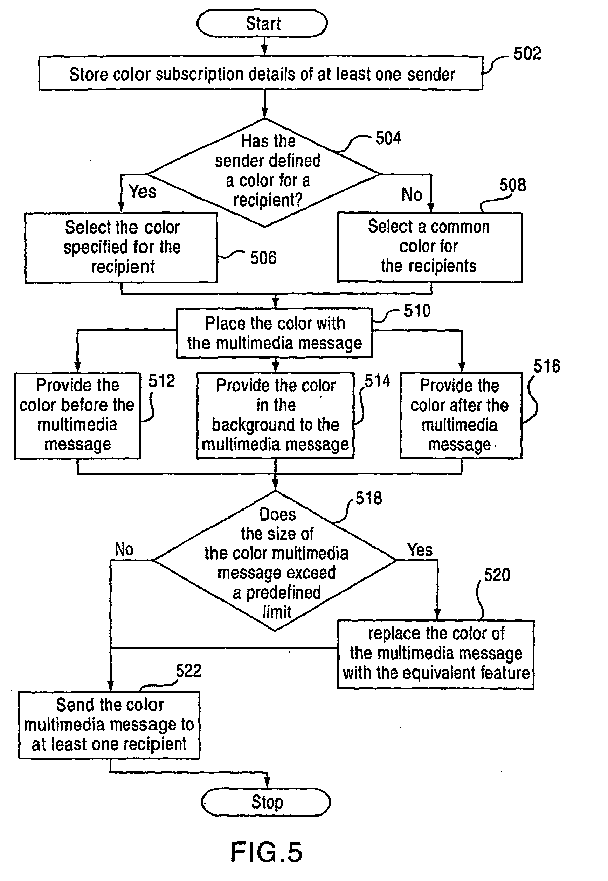

At step 402, the color subscription details of at least one sender are stored in subscriber's database 202. The color subscription details include the name of the sender, the type of service subscribed by the sender, the supporting services subscribed by the sender, and the period of subscription. The supporting services include the additional services that may be available within a particular type of service. For example, a subscriber may subscribe to the service for providing one or more colors to a multimedia message. A supporting service may include specifying the duration of the activation of a color. At step 404, the one or more colors subscribed by a sender are selected by color selection module 204. A color subscribed by the sender is selected from one of subscriber's personal inputs, a celebrity voice, a joke, an advertisement, a ring tone, music, an audio file, a video file, other multimedia content and combinations thereof. At step 406, the one or more colors are linked with the multimedia message by color linking module 206. The linking of a color with the multimedia message is further explained in conjunction with FIG. 5. At step 408, the color multimedia message is sent to at least one recipient by sending module 208 by using at least one single stream.

FIG. 5 illustrates a flowchart representing another embodiment of a method for providing one or more colors to a multimedia message. At step 502, color subscription details of at least one sender are stored by subscriber's database 202. A sender dials in the color-provisioning multimedia messaging system to leave a multimedia message for at least one recipient. In an embodiment of the invention, the sender can define a color for each recipient or a default color for all the recipients at the time of subscribing the color multimedia messaging service. In another embodiment, the subscriber can define a color as per a category. For example, a romantic category, for one or more recipient or a default color for all the recipients. The selected color may be recipient-specific or a color common for all the recipients. At step 504, the method determines whether the sender has defined a color for a recipient. At step 506, the color-provisioning multimedia messaging system selects the color defined by the sender for the recipient. Alternatively, at step 508, the color-provisioning multimedia messaging system selects a common color for the recipient. At step 510, the selected color is linked with the multimedia message by color linking module 206. The sender specifies the order of linking the color and the multimedia message. Therefore, the color may be linked in accordance with at least one of the steps 512, 514, and 516. At step 512, the color is provided before the multimedia message by pre-linking color module 302. At step 514, the color is provided as a background to the multimedia message by background color module 304. At step 516, the color is provided after the multimedia message by post-linking color module 306. At step 518, the method determines whether the size of the color and the multimedia message exceeds a predefined size. When the size of the color multimedia message exceeds the predefined size, at step 520, the color of the color multimedia message is replaced with a feature equivalent to the color by color replacement module 312. Alternatively, when the size of the color multimedia message exceeds the predefined size, at,step 522, the color multimedia message is sent to at least one recipient by sending module 208.

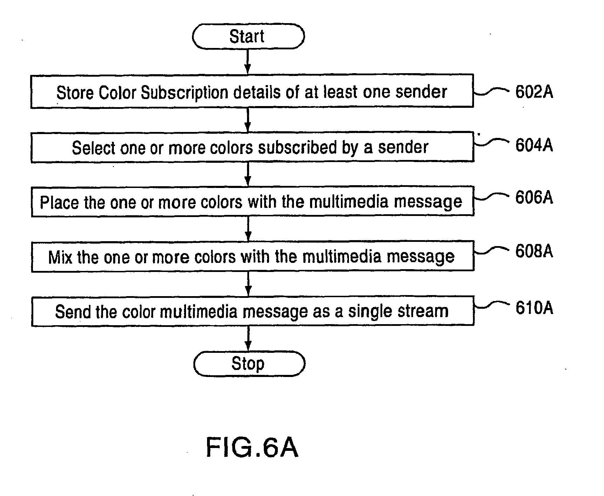

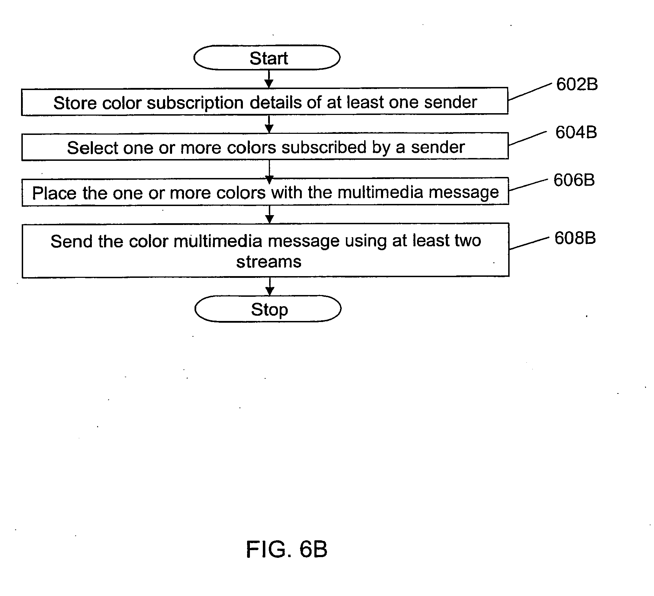

FIG. 6A and FIG. 6B illustrate flowcharts of two different embodiments of a method for sending a color multimedia message.

FIG. 6A illustrates an embodiment of a method for sending a color multimedia message using a single stream. At step 602A, color subscription details of at least one sender are stored in subscriber's database 202. At step 604A, the color subscribed by the sender is selected by color selection module 204. At step 606A, the order of linking the selected color with the multimedia message is specified by color linking module 206. Further, at step 608A, the selected color is mixed with the multimedia message in the specified order by color mixing module 208. At step 610A, the color multimedia message is sent to the recipient using a single stream by color sending module 308.

FIG. 6B illustrates an embodiment of a method for sending a color multimedia message using a conference bridge comprising at least two streams. At step 602B, color subscription details of at least one sender are stored in subscriber's database 202. At step 604B, the color subscribed by the sender is selected by color selection module 204. At step 606B, the selected color is linked with the multimedia message by color linking module 206. The selected color is linked with the multimedia message in the order specified by the sender. At step 608A, the color multimedia message is sent to the recipient by color sending module 208. The color multimedia message is sent using a conference bridge comprising of at least two streams. A stream comprises a color or a multimedia message. The stream is delivered in the order specified by color linking module 206.

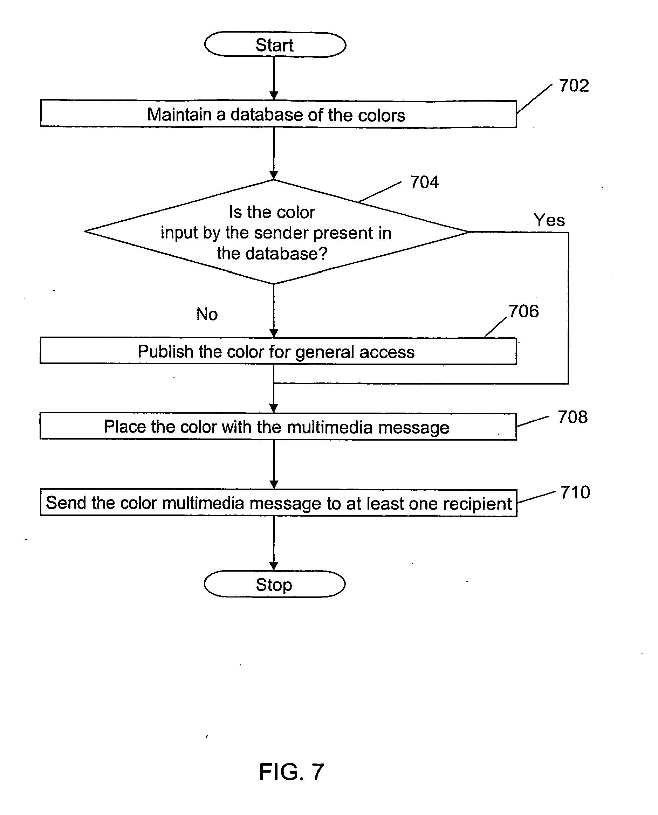

FIG. 7 illustrates a flowchart of an embodiment of a method of publishing a color input by a sender. At step 702, the database comprising various color options is maintained by database 316. The color is input by the sender using a customer interface that include but are not limited to WAP, Web, IVR, call. At step 708, the input color is vetted by an operator. The vetting includes determining whether color input by the sender is present in database 316. At step 710, the color input by the sender is published by publishing module 320 for general access if the color input by the sender is not present in database 316. At step 712, the color is linked with the multimedia message by color linking module 204 if the color input by the sender is present in database 316. At step 714, color multimedia message is sent to at least one recipient by sending module 208.

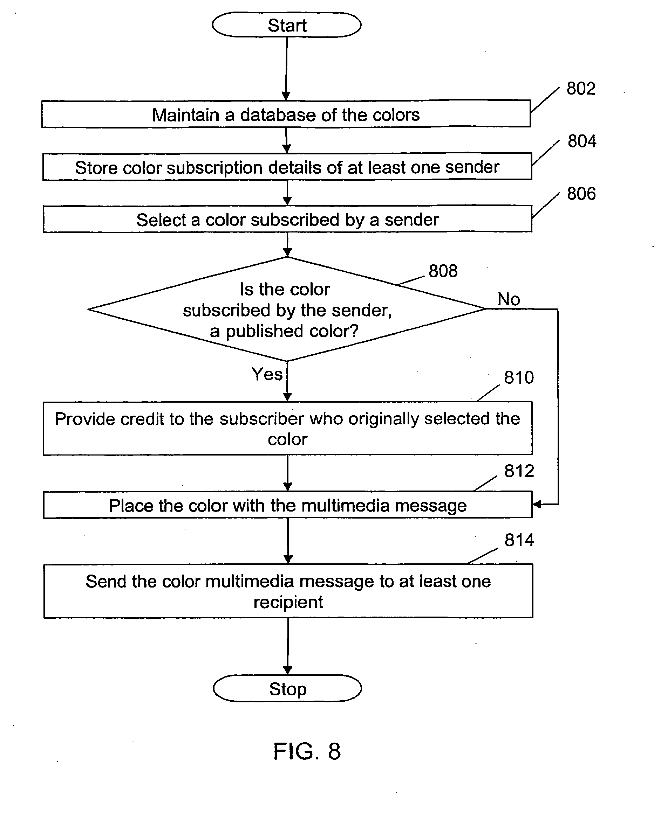

FIG. 8 illustrates a flowchart providing credit to a publisher for his published color in an embodiment of the present invention. At step 802, the database of colors is maintained by database 316. At step 804, color subscription details of at least one sender are stored in subscriber's database 202. At step 806, a color subscribed by a sender for a recipient is selected by color selection module 204. At step 808, the method determines whether the color subscribed by the sender is a published color. If the color subscribed by the sender is a published color, then at step 810, accredit module 324 provides a credit to the subscriber who had provided the color to the system. At step 812, the color is linked with the multimedia message by color linking module 206. At step 814, color multimedia message is sent to at least one recipient by sending module 208.

In an embodiment of the invention, the sender can select the time of activation of a color multimedia message. In another embodiment of the invention, the sender can select the duration of the activation of the color in the color multimedia message.

The invention further provides a computer readable medium for storing a computer program. The computer program when executed by a processor causes the processor to perform the method for providing one or more colors to a multimedia message. The method comprises the steps of storing color subscription details of at least one sender, selecting the one or more colors subscribed by a sender using the subscriber's database, linking the one or more colors with the multimedia message, and sending the color multimedia message to at least one recipient.

### Other Variations

Provided above for the edification of those of ordinary skill in the art, and not as a limitation on the scope of the present invention as defined by the appended claims are detailed illustrations of a scheme for sending at least one color multimedia message between a sender and a recipient. For example, while in the described embodiments, the present invention is implemented primarily from the point of view of common-carrier networks of voice telecommunications by mobile means, the present invention may also be effectively implemented on a handset of a fixed line phone (including VoIP, PC desktop client etc).

The color-provisioning multimedia messaging system is radio technology independent and works with 2G (GSM or CDMA or PDC or other) or 3G (3GPP, 3GPP2, IMS etc) technology. Further, it is completely handset independent from a sender's (including reply) perspective since it only requires a phone call to a backend IVR system. The handset can therefore be a fixed line phone (including VoIP, PC desktop client etc) or mobile phone (including all IP, SIP, IMS etc). However, the SMS alert mechanism described above requires the recipient device of the multimedia message to support multimedia message which is a basic functionality of mobile phones.

The examples under the present invention detailed in the illustrative examples contained herein are described using terms and constructs drawn largely from GSM mobile telephony infrastructure. But use of these examples should not be interpreted to limiting the present invention to those media. The present invention can be of use and provided through any type of telecommunications medium, including without limitation: (i) any mobile telephony network including without limitation GSM, 3GSM, 3G, PCS, TDMA, CDMA or CDMA 2000, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices,; (iii) an entertainment console platform such as Sony Playstation, PSP or other apparatus that are capable of sending and receiving telecommunications over home or non-home networks, or even (iv) fixed-line devices made for receiving communications but capable of deployment in numerous locations while preserving a persistent subscriber id such as the eye2eye devices from Dlink or telecommunications equipment meant for voice over IP communications such as those provided by Vonage or Packet8.

### Technical references

GSM 378 on CAMEL
   Digital cellular telecommunications system (Phase 2+);
   Customised Applications for Mobile network Enhanced Logic (CAMEL) Phase 2;
   Stage 2
   (GSM 03.78 version 6.7.0 Release 1997)
GSM 978 on CAMEL Application protocol
   Digital cellular telecommunications system (Phase 2+);
   Customised Applications for Mobile network Enhanced Logic (CAMEL);
   CAMEL Application Part (CAP) specification
   (GSM 09.78 version 7.1.0 Release 1998)
Q761-Q730 on ISUP Signaling, Function and Procedure
Q.761 (Functional description of the ISDN User Part of CCITT Signaling System No. 7)
Q.762 (General functions of CCITT Signaling System No. 7 ISDN User Part Messages and parameters)
Q.763 (Formats and codes of CCITT Signaling System No. 7 ISDN User Part Messages and parameters)
Q.764 (1999), Signaling System No. 7 - ISDN User Part signaling procedures
Q.763 (1999), Signaling System No. 7 - ISDN User Part formats and codes
Q.730 (1999), ISDN User Part supplementary services
Q.711 (1996), Functional description of signaling connection control part
Q.712 (1996), Definition and function of signaling connection control part messages
Q.713 (1996), Signaling connection control part formats and codes
Q.714 (1996), Signaling connection control part procedures
Q.716 (1993), Signaling Connection Control Part (SCCP) performance
GSM 340 on SMS
   Digital cellular telecommunications system (Phase 2+);
   Technical realization of the Short Message Service (SMS);
   (GSM 03.40 version 7.4.0 Release 1998)
SMPP Forum: SMPP Protocol Document Version:- 12-Oct-1999 Issue 1.2
Universal Mobile Telecommunications System (UMTS);
   Multimedia Messaging Service (MMS), Functional description;
   Stage 2
   (3GPP TS 23.140 version 4.2.0 Release 4)
GSM 902 on MAP specification
   Digital cellular telecommunications system (Phase 2+);
   Mobile Application Part (MAP) Specification
   (3GPP TS 09.02 version 7.9.0 Release 1998)
GSM 340 on SMS
   Digital cellular telecommunications system (Phase 2+);
   Technical realization of the Short Message Service (SMS);
   (GSM 03.40 version 7.4.0 Release 1998)
GSM 378 on CAMEL
   Digital cellular telecommunications system (Phase 2+);
   Customised Applications for Mobile network Enhanced Logic (CAMEL) Phase 2; Stage 2
   (GSM 03.78 version 6.7.0 Release 1997)
GSM 978 on CAMEL Application protocol
   Digital cellular telecommunications system (Phase 2+);
   Customised Applications for Mobile network Enhanced Logic (CAMEL); CAMEL Application Part (CAP) specification
   (GSM 09.78 version 7.1.0 Release 1998)
Technical Specification
   3rd Generation Partnership Project;
   Technical Specification Group Services and System Aspects;
   Service accessibility
   (Release 1999)
Signalling procedures and the Mobile Application Part (MAP)
   (Release 1999)
Q1214-Q1218 on Intelligent Networks
   IMS architectures, 3GPP, and 3GPP2

**Acronyms**

| | |
|---|---|
| SMS | Short Message Service |
| VMSC | Visited Mobile Switching Center |
| SMSC | Short Message Service Center |
| SMPP | Short Message Peer-to-Peer |
| UCP | Universal Computer Protocol |
| IP | Internet Protocol |
| SS7 | Signaling System 7 |
| ISUP | Integrated Services User Part |
| ISDN | Integrated Services Digital Network |
| UDI | Uniform Device Interface |
| Kbps | Kilobits per second |
| VoIP | Voice over Internet Protocol |
| PC | Personal Computer |
| 2G | Second Generation Wireless Telephone Technology |
| 3G | Third Generation Wireless Telephone Technology |
| GSM | Global System for Mobile Communications |
| CDMA | Code Division Multiple Access |
| TDMA | Time Division Multiple Access |
| PDC | Personal Digital Cellular |
| PCS | Personal Communications System |

## Claims

1. A color-provisioning multimedia messaging system (106) for providing one or more colors to a multimedia message, the system comprising:
a. a subscriber's database (202) adapted for storing color subscription details of at least one sender;
b. a color selection module (204) adapted for selecting one or more colors subscribed by a sender using the subscribers database;
c. a color linking module (206) adapted for linking the one or more colors with the multimedia message; and
d. a sending module (208) adapted for sending the colored multimedia message to at least one recipient, the system being **characterised in that** it further comprises a color replacement module (312) adapted for replacing a color of the colored multimedia message with a feature equivalent to the color if the size of the colored multimedia message exceeds a predefined size.

2. The system of claim 1, wherein the color selection module selects the one or more colors from a group consisting of a subscriber's personal inputs, a celebrity voice, a joke, an advertisement, a ring tone, music, an audio file, a video file, other multimedia content and combinations thereof.

3. The system of claim 1 or 2, wherein the color linking module (206) comprises at least one of:
a pre-linking color module (302) adapted for linking a color before the multimedia message;
a background color module (304) adapted for linking a color in the background to the multimedia message;
a post-linking color module (306) adapted for linking a color after the multimedia message; and
a color mixing module (308) adapted to mix a color with the multimedia message in the order specified by the color linking module.

4. The system of any of claims 1-3, wherein the color linking module (206) comprises a color mixing module (308) and wherein the sending module comprises a single stream to send the colored multimedia message received from the color mixing module.

5. The system of any of the preceding claims, wherein the sending module comprises a conference bridge comprising at least two streams to send the one or more colors and the multimedia message in the order specified by the color linking module.

6. The system of any of the preceding claims further comprising a size checking module (310) adapted for checking the size of the colored multimedia message.

7. The system of any of the preceding claims further comprising a subscriber preference module (314) adapted for listing at least one preference of the sender for at least one recipient.

8. The system of any of the preceding claims, wherein a color is active for a predefined time interval.

9. The system of any of the preceding claims further comprising a database (316) adapted for maintaining color options provided to a subscriber.

10. A method for providing one or more colors to a multimedia message, the method comprising:
a. storing color subscription details of at least one sender;
b. selecting the one or more colors subscribed by a sender using a subscriber's database;
c. linking the one or more colors with the multimedia message; and
d. sending the colored multimedia message to at least one recipient, the method being
**characterised in that** it further comprises replacing a color of the colored multimedia message with an equivalent feature if the size of the colored multimedia message exceeds a predefined size.

11. The method of claim 10 further comprising one of:
adding a common color to the multimedia message for all the recipients; and
adding a different color to the multimedia message for at least one recipient.

12. The method of claim 10 or 11 further comprising receiving a color from a subscriber and publishing it to enable at least one new subscriber to access it.

13. The method of any of claims 10-12 further comprising at least one of:
providing an option to the sender to provide color on one-time basis;
providing an option to the sender to specify the time of activation of the color in the colored multimedia message;
providing an option to the sender to specify the duration of activation of the color in the colored multimedia message; and
providing an option to the recipient to select the received color for subscription.

14. The method of any of claims 10-13, wherein the method further comprises: providing an option to the recipient to select the received color for subscription and wherein the received color is subscribed for at least one of a color to be linked with a multimedia message, ring tone with a multimedia message, or signature to be linked with a multimedia message.

15. The method of any of claims 10-13 in which the color is selected from a group consisting of a subscriber's personal inputs, a celebrity voice, a joke, an advertisement, a ring tone, music, an audio file, a video file, other multimedia content and combinations thereof.

16. A computer readable medium for storing a computer program that, when executed by a processor, cause the processor to perform a method according to any of claims 10-15.

## Patentansprüche

1. Farbe bereitstellendes Multimedia-Nachrichtenübermittlungssystem (106) zum Bereitstellen von einer oder mehreren Farben für eine Multimedia-Nachricht, wobei das System Folgendes umfasst:
a. eine Teilnehmerdatenbank (202), die dafür ausgelegt ist, Farbsubskriptionseinzelheiten mindestens eines Absenders zu speichern;
b. ein Farbauswahlmodul (205), das dafür ausgelegt ist, unter Verwendung der Teilnehmerdatenbank eine oder mehrere von einem Absender subskribierte Farben auszuwählen;
c. ein Farbverknüpfungsmodul (206), das dafür ausgelegt ist, die eine oder die mehreren Farben mit der Multimedia-Nachricht zu verknüpfen; und
d. ein Sendemodul (208), das dafür ausgelegt ist, die gefärbte Multimedia-Nachricht zu mindestens einem Empfänger zu senden, wobei das System **dadurch gekennzeichnet ist, dass** es ferner ein Farbersetzungsmodul (312) umfasst, das dafür ausgelegt ist, eine Farbe der gefärbten Multimedia-Nachricht mit einem der Farbe äquivalenten Merkmal zu ersetzen, wenn die Größe der gefärbten Multimedia-Nachricht eine vordefinierte Größe überschreitet.

2. System nach Anspruch 1, wobei das Farbauswahlmodul die eine oder die mehreren Farben aus einer folgenden Gruppe auswählt: persönliche Eingaben eines Teilnehmers, die Stimme einer berühmten Person, ein Scherz, eine Werbung, ein Anrufton, Musik, eine Audiodatei, eine Videodatei, anderer Multimediainhalt und Kombinationen davon.

3. System nach Anspruch 1 oder 2, wobei das Farbverknüpfungsmodul (206) mindestens eines der Folgenden umfasst:
ein Vorverknüpfungs-Farbmodul (302), das dafür ausgelegt ist, eine Farbe vor der Multimedia-Nachricht zu verknüpfen;
ein Hintergrund-Farbmodul (304), das dafür ausgelegt ist, eine Farbe im Hintergrund der Multimedia-Nachricht zu verknüpfen;
ein Nachverknüpfungs-Farbmodul (306), das dafür ausgelegt ist, eine Farbe nach der Multimedia-Nachricht zu verknüpfen; und
ein Farbmischmodul (308), das dafür ausgelegt ist, eine Farbe in der durch das Farbverknüpfungsmodul spezifizierten Reihenfolge mit der Multimedia-Nachricht zu mischen.

4. System nach einem der Ansprüche 1-3, wobei das Farbverknüpfungsmodul (206) ein Farbmischmodul (308) umfasst und wobei das Sendemodul einen einzigen Strom zum Senden der von dem Farbmischmodul empfangenen gefärbten Multimedia-Nachricht umfasst.

5. System nach einem der vorhergehenden Ansprüche, wobei das Sendemodul eine Konferenzbrücke umfasst, die mindestens zwei Ströme zum Senden der einen oder der mehreren Farben und der Multimedia-Nachricht in der durch das Farbverknüpfungsmodul spezifizierten Reihenfolge umfasst.

6. System nach einem der vorhergehenden Ansprüche, ferner mit einem Größenprüfmodul (310), das dafür ausgelegt ist, die Größe der gefärbten Multimedia-Nachricht zu prüfen.

7. System nach einem der vorhergehenden Ansprüche, ferner mit einem Teilnehmerpräferenzmodul (314), das dafür ausgelegt ist, mindestens eine Präferenz des Absenders für mindestens einen Empfänger aufzulisten.

8. System nach einem der vorhergehenden Ansprüche, wobei eine Farbe für ein vordefiniertes Zeitintervall aktiv ist.

9. System nach einem der vorhergehenden Ansprüche, ferner mit einer Datenbank (316), die dafür ausgelegt ist, einem Teilnehmer bereitgestellte Farboptionen zu unterhalten.

10. Verfahren zum Bereitstellen von einer oder mehreren Farben für eine Multimedia-Nachricht, wobei das Verfahren die folgenden Schritte umfasst:
a. Speichern von Farbsubskriptionseinzelheiten mindestens eines Absenders;
b. Auswählen einer oder mehrerer von einem Absender subskribierter Farben unter Verwendung einer Teilnehmerdatenbank;
c. Verknüpfen der einen oder der mehreren Farben mit der Multimedia-Nachricht; und
d. Senden der gefärbten Multimedia-Nachricht zu mindestens einem Empfänger, wobei das Verfahren **dadurch gekennzeichnet ist, dass** es ferner umfasst, eine Farbe der gefärbten Multimedia-Nachricht mit einem äquivalenten Merkmal zu ersetzen, wenn die Größe der gefärbten Multimedia-Nachricht eine vordefinierte Größe überschreitet.

11. Verfahren nach Anspruch 10, ferner umfassend:
Hinzufügen einer gemeinsamen Farbe zu der Multimedia-Nachricht für alle Empfänger; oder
Hinzufügen einer anderen Farbe zu der Multimedia-Nachricht für mindestens einen Empfänger.

12. Verfahren nach Anspruch 10 oder 11, ferner mit dem Schritt des Empfangens einer Farbe von einem Teilnehmer und des Publizierens dieser, um es mindestens einem neuen Teilnehmer zu ermöglichen, auf sie zuzugreifen.

13. Verfahren nach einem der Ansprüche 10-12 ferner mit mindesten einer der folgenden Alternativen:
Bereitstellen einer Option für den Absender, um Farbe auf einmaliger Grundlage bereitzustellen;
Bereitstellen einer Option für den Absender, den Zeitpunkt der Aktivierung der Farbe in der gefärbten Multimedia-Nachricht zu spezifizieren;
Bereitstellen einer Option für den Absender, die Dauer der Aktivierung der Farbe in der gefärbten Multimedia-Nachricht zu spezifizieren; und
Bereitstellen einer Option für den Empfänger, die empfangene Farbe für Subskription auszuwählen.

14. Verfahren nach einem der Ansprüche 10-13, wobei das Verfahren ferner Folgendes umfasst:
Bereitstellen einer Option für den Empfänger, die empfangene Farbe für Subskription auszuwählen, und wobei die empfangene Farbe für mindestens eine der folgenden Alternativen subskribiert wird: eine mit einer Multimedia-Nachricht zu verknüpfende Farbe, einen Anrufton mit einer Multimedia-Nachricht oder eine mit einer Multimedia-Nachricht zu verknüpfende Signatur.

15. Verfahren nach einem der Ansprüche 10-13, wobei die Farbe aus einer folgenden Gruppe ausgewählt wird: persönliche Eingaben eines Teilnehmers, die Stimme einer berühmten Person, ein Scherz, eine Werbung, ein Anrufton, Musik, eine Audiodatei, eine Videodatei, anderer Multimediainhalt und Kombinationen davon.

16. Computerlesbares Medium zum Speichern eines Computerprogramms, das, wenn es durch einen Prozessor ausgeführt wird, bewirkt, dass der Prozessor ein Verfahren nach einem der Ansprüche 10-15 ausführt.

## Revendications

1. Système de messagerie multimédia à allocation de couleur (106) pour attribuer une ou plusieurs couleurs à un message multimédia, le système comprenant :
a. une base de données Abonné (202) conçue pour stocker les détails de l'abonnement couleur d'au moins un expéditeur ;
b. un module de sélection de couleurs (204) conçu pour sélectionner une ou plusieurs couleurs auxquelles un expéditeur est abonné en utilisant la base de données Abonné ;
c. un module d'association de couleur (206) conçu pour lier ladite ou lesdites couleurs au message multimédia ; et
d. un module d'expédition (208) conçu pour envoyer le message multimédia coloré à au moins un destinataire, le système étant **caractérisé en ce qu'**il comprend en outre un module de remplacement de couleur (312) conçu pour remplacer une couleur du message multimédia coloré par une propriété équivalente à la couleur si la taille du message multimédia coloré dépasse une taille prédéfinie.

2. Système selon la revendication 1, le module de sélection de couleurs sélectionnant ladite ou ladites couleurs parmi un groupe composé des éléments suivants à savoir, les saisies personnelles d'un abonné, la voix d'une personne connue, une plaisanterie, une publicité, une tonalité de sonnerie, une musique, un fichier audio, un fichier vidéo, d'autres contenus multimédia et des combinaisons de ces éléments.

3. Système selon la revendication 1 ou 2, le module d'association de couleur (206) comprenant au moins l'un des postes suivants :
un module de pré-association de couleur (302) conçu pour lier une couleur avant le message multimédia ;
un module de couleur d'arrière-plan (304) conçu pour lier une couleur dans l'arrière-plan affecté au message multimédia ;
un module de post-association de couleur (306) conçu pour lier une couleur après le message multimédia ; et
un module de mélange de couleurs (308) conçu pour mélanger une couleur au message multimédia suivant l'ordre spécifié par le module d'association de couleur.

4. Système selon l'une quelconque des revendications 1 à 3, le module d'association de couleur (206) englobant un module de mélange de couleurs (308), et le module d'expédition comprenant un seul flux permettant d'envoyer le message multimédia coloré reçu à partir du module de mélange de couleurs.

5. Système selon l'une quelconque des revendications précédentes, le module d'expédition comprenant une passerelle de conférence qui comporte au moins deux flux permettant d'envoyer ladite ou lesdites couleurs et le message multimédia suivant l'ordre spécifié par le module d'association de couleur.

6. Système selon l'une quelconque des revendications précédentes, comprenant en outre un module de vérification de taille (310) conçu pour vérifier la taille du message multimédia coloré.

7. Système selon l'une quelconque des revendications précédentes, comprenant en outre un module de préférence Abonné (314) conçu pour répertorier au moins une préférence de l'expéditeur pour au moins un destinataire.

8. Système selon l'une quelconque des revendications précédentes, la couleur étant active pendant un intervalle de temps prédéfini.

9. Système selon l'une quelconque des revendications précédentes, comprenant en outre une base de données (316) conçue pour conserver les options de couleur proposées à un abonné.

10. Procédé servant à attribuer une ou plusieurs couleurs à un message multimédia, le procédé comprenant les opérations consistant à :
a. stocker les détails de l'abonnement couleur d'au moins un expéditeur ;
b. sélectionner ladite ou ladites couleurs auxquelles un expéditeur est abonné en utilisant une base de données Abonné ;
c. lier ladite ou ladites couleurs au message multimédia ; et
d. envoyer le message multimédia coloré à au moins un destinataire, le procédé étant **caractérisé en ce qu'**il comprend en outre le remplacement d'une couleur du message multimédia coloré par une propriété équivalente si la taille du message multimédia coloré dépasse une taille prédéfinie.

11. Procédé selon la revendication 10 comprenant en outre l'une des opérations consistant à :
ajouter une couleur commune au message multimédia pour tous les destinataires ; et
ajouter une couleur différente au message multimédia pour au moins un destinataire.

12. Procédé selon la revendication 10 ou 11 comprenant en outre la réception d'une couleur en provenance d'un abonné et sa publication pour permettre à au moins un nouvel abonné d'y accéder.

13. Procédé selon l'une quelconque des revendications 10 à 12, comprenant en outre l'une au moins des opérations consistant à :
proposer à l'expéditeur une option pour attribuer une couleur suivant une base unique ;
proposer à l'expéditeur une option pour spécifier le moment d'activation de la couleur dans le message multimédia coloré ;
proposer à l'expéditeur une option pour spécifier la durée d'activation de la couleur dans le message multimédia coloré ; et
proposer au destinataire une option pour sélectionner la couleur reçue à des fins d'abonnement.

14. Procédé selon l'une quelconque des revendications 10 à 13, le procédé comprenant en outre l'opération consistant à : proposer au destinataire une option pour sélectionner la couleur reçue à des fins d'abonnement, la couleur reçue faisant l'objet d'un abonnement pour au moins une couleur destinée à être liée à un message multimédia, une tonalité de sonnerie avec un message multimédia, ou une signature destinée à être liée à un message multimédia.

15. Procédé selon l'une quelconque des revendications 10 à 13, la couleur étant sélectionnée parmi un groupe composé des éléments suivants à savoir, les saisies personnelles d'un abonné, la voix d'une personne connue, une plaisanterie, une publicité, une tonalité de sonnerie, une musique, un fichier audio, un fichier vidéo, d'autres contenus multimédia et des combinaisons de ces éléments.

16. Support lisible par ordinateur pour stocker un programme informatique qui, lors de son exécution par un processeur, oblige le processeur à réaliser un procédé selon l'une quelconque des revendications 10 à 15.
